(19) Europäisches Patentamt / European Patent Office / Office européen des brevets

(11) **EP 3 217 112 B1**

(12) **EUROPEAN PATENT SPECIFICATION**

(45) Date of publication and mention of the grant of the patent:
**17.08.2022 Bulletin 2022/33**

(21) Application number: **14905322.5**

(22) Date of filing: **05.11.2014**

(51) International Patent Classification (IPC):
**F24F 5/00** *(2006.01)*   **F25B 1/00** *(2006.01)*
**F25B 13/00** *(2006.01)*   **F25B 49/02** *(2006.01)*
**F25B 25/00** *(2006.01)*   **F25B 47/00** *(2006.01)*

(52) Cooperative Patent Classification (CPC):
**F24F 5/00; F24F 11/89; F25B 47/006; F25B 49/02;**
F25B 13/00; F25B 25/005; F25B 2313/003;
F25B 2600/021; F25B 2600/13; F25B 2600/21;
F25B 2700/197; F25B 2700/21171;
F25B 2700/21175; Y02B 30/70

(86) International application number:
**PCT/JP2014/079375**

(87) International publication number:
**WO 2016/071977 (12.05.2016 Gazette 2016/19)**

(54) **REFRIGERATION CYCLE DEVICE**

KÄLTEKREISLAUFVORRICHTUNG

DISPOSITIF À CYCLE FRIGORIFIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**13.09.2017 Bulletin 2017/37**

(73) Proprietor: **Mitsubishi Electric Corporation Chiyoda-ku Tokyo 100-8310 (JP)**

(72) Inventors:
• **ITO, Masahiro Tokyo 100-8310 (JP)**

• **TANAKA, Kosuke Tokyo 100-8310 (JP)**

(74) Representative: **Pfenning, Meinig & Partner mbB Patent- und Rechtsanwälte Theresienhöhe 11a 80339 München (DE)**

(56) References cited:
WO-A1-2011/092802   JP-A- 2009 243 828
JP-A- 2012 247 111   JP-A- 2013 079 749
JP-A- 2013 190 162   JP-B2- 4 823 264
JP-B2- 5 484 503   US-A1- 2013 167 567

EP 3 217 112 B1

**Description**

Technical Field

The present invention relates to a refrigeration cycle apparatus capable of cooling a heat medium such as water.

Background Art

Conventionally, a refrigeration cycle apparatus having a heat exchanger in which a heat medium such as water and refrigerant exchange heat (for example, a water heat exchanger) has existed. A water heat exchanger functioning as an evaporator is configured such that low-pressure and low-temperature refrigerant liquid and a heat medium flow to exchange heat as desired. This means that the refrigerant liquid receives heating energy (evaporation heat) from the heat medium and evaporates, while the heat medium is cooled because the heating energy is consumed. As such, when the temperature of the heat medium drops to the freezing temperature by the cooling, the heat medium is frozen in the flow channel of the evaporator. Accordingly, in the case of cooling a heat medium in such a refrigeration cycle apparatus, it is important to prevent freezing of the heat medium to secure reliability.

As such an apparatus, there is disclosed "a cooling device including a determination unit and a freezing prevention controlling unit, wherein the determination unit compares freezing wall temperature ($\theta wf$), calculated from low-pressure refrigerant temperature (Tin), cooled fluid inflow temperature ($\theta in$), and cooled fluid outflow temperature ($\theta out$), and wall temperature ($\theta w$), and when the wall temperature ($\theta w$) falls within a predetermined range ($\alpha\theta$) with respect to the freezing wall temperature ($\theta wf$), the determination unit determines that blocking of the flow channel is caused by freezing, and when the determination unit determines that blocking is caused by freezing of the flow channel, the freezing prevention controlling unit allows at least one of reduction of the rotation speed of a compressor, reduction of the air sending amount by an air sending unit, an increase in the opening area of a throttling unit, and an increase in the sending amount of a cooled fluid by a cooled fluid sending unit, to thereby prevent the cooled fluid from freezing" (see Patent Literature 1, for example).

Further, there is disclosed "a cooling apparatus including an operation information detection unit that detects operation information of the cooling apparatus from a refrigerant pressure on the low-pressure side in a refrigerant circuit, refrigerant temperature on the suction side of the compressor, temperature of cooled fluid flowing into an evaporator, temperature of the cooled fluid flowing out of the evaporator, operation capacity of the compressor, and the flow amount of the cooled fluid in the cooled fluid flow channel; and a cooled fluid concentration detection unit that computes a product of the cooled fluid density and cooled fluid specific heat based on the operation information from the operation information detection unit, and determines the state of concentration of the cooled fluid based on correlation between the computation result and the concentration of the cooled fluid" (see Patent Literature 2, for example).

Document JP 2013 079749 A discloses a cooling device for cooling a liquid to be cooled.

Document US 2013/167567 A1 discloses a refrigeration cycle apparatus that supplies a cooling target fluid cooled to an intended temperature.

Citation List

Patent Literature

Patent Literature 1: Japanese Patent No. 4823264
Patent Literature 2: Japanese Patent No. 5484503

Summary of Invention

Technical Problem

In the conventional art disclosed in Patent Literatures 1 and 2, freezing wall temperature of a water heat exchanger (hereinafter referred to as water heat exchanger freezing wall temperature Twf) is calculated according to the following Expression (1) and Expression (2), where any of the arithmetic mean water temperature, the inlet water temperature of the water heat exchanger, and the outlet water temperature of the water heat exchanger is adopted as water temperature Tw:

$$\text{Expression (1) } Twf = Tf - \theta c^* \times (Tw - Tf)$$

$$\text{Expression (2) } \theta c^* = 0.192 \times Rew^{0.35}$$

Here,

Tf: water frozen temperature [degrees C],
Tw: water temperature [degrees C]

= inlet water temperature of water heat exchanger (Twin),
or ,outlet water temperature of water heat exchanger (Twout),
or arithmetic mean water temperature ((Twin + Twout)/2),

$\theta c^*$: freezing limit cooling temperature ratio [dimensionless],
Rew: Reynolds number of water (= $Uw \times dh/vw$) [dimensionless],
Uw: water flow velocity [m/s],
dh: hydraulic equivalent diameter [m],
vw: water kinematic viscosity [$m^2/s$].

When an operation in which the effective heat transfer area of the water heat exchanger is decreased (assuming that outlet SH (superheat (degree of superheat)) = large) is performed, (1) in the case of performing calculation using the arithmetic mean water temperature is used as the freezing wall temperature Twf, there was a case where freezing is caused even when wall temperature Twl > freezing wall temperature Twf (calculated). Further, (2) in the case of using the outlet water temperature as the freezing wall temperature Twf, Twl < Twf is caused, so that the operating range is narrowed although freezing is not caused.

Accordingly, it has been found that there may be a case where freezing is caused or the operating range is reduced although freezing is not caused, depending on the water temperature adopted in Expressions (1) and (2).

The present invention has been made to solve the problem described above. An object of the present invention is to provide a refrigeration cycle apparatus configured to suppress reduction in the operating range while preventing freezing, by improving the freezing determination system.

Solution to Problem

The invention is set out in the appended set of claims.

Advantageous Effects of Invention

According to the refrigeration cycle apparatus of one embodiment of the present invention, freezing prevention control to control freezing of a heat medium flowing through a water heat exchanger is performed based on the outlet superheat of the water heat exchanger and the outlet water temperature and the inlet water temperature of the water heat exchanger. Therefore, it is possible to protect the water heat exchanger from freezing and to maximize the operating range.

Brief Description of Drawings

[Fig. 1] Fig. 1 is a schematic circuit diagram illustrating a circuit configuration of a refrigeration cycle apparatus according to an embodiment of the present invention.
[Fig. 2] Fig. 2 is a graph showing a correlation between water temperature and freezing temperature in a water heat exchanger.
[Fig. 3] Fig. 3 is a graph showing changes in the water temperature in a water heat exchanger.
[Fig. 4] Fig. 4 is a graph for explaining the principle of calculating freezing wall temperature Twf in the refrigeration cycle apparatus according to an example.
[Fig. 5] Fig. 5 is a graph showing a correlation between water temperature and freezing temperature in a water heat exchanger of the refrigeration cycle apparatus according to an example.

Description of Embodiments

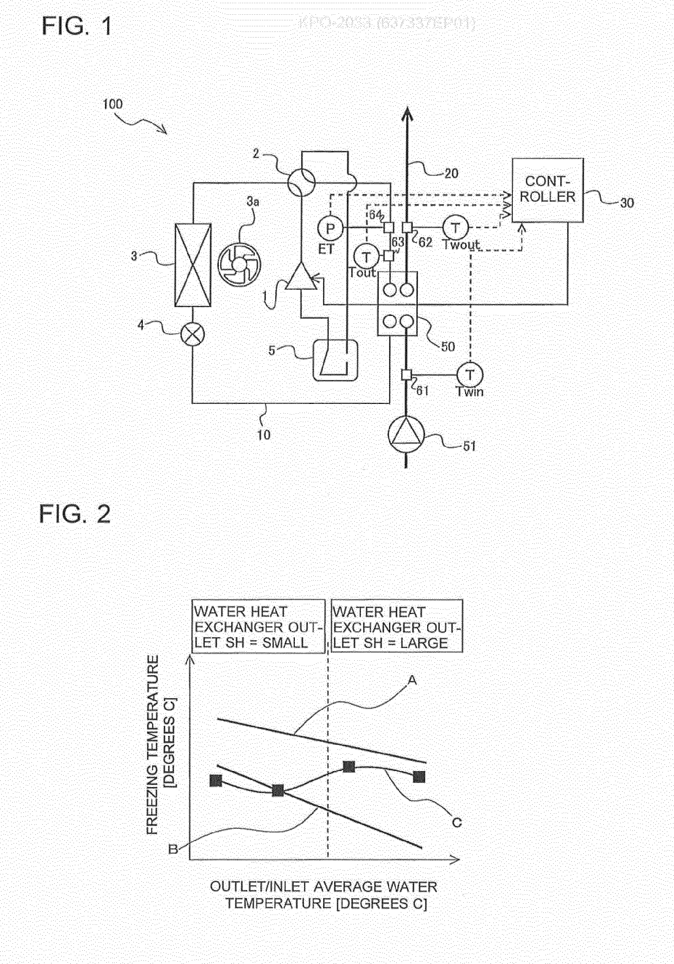

An embodiment of the present invention will be described below based on the drawings. It should be noted that in the drawings described below including Fig. 1, the size relationship between respective components may not be the same as actual ones. Further, in the drawings described below including Fig. 1, those denoted by the same reference numerals or reference characters are identical or equivalent thereto, which applies to the entire description. Further, the forms of the constituent elements described in the entire description are provided for illustrative purposes, and are not limited to the forms described herein.

Fig. 1 is a schematic circuit diagram illustrating a circuit configuration of a refrigeration cycle apparatus 100 according to an embodiment of the present invention. The device configuration of the refrigeration cycle apparatus 100 will be described based on Fig. 1. The refrigeration cycle apparatus 100 includes a heat exchanger in which refrigerant and a heat medium exchange heat (hereinafter simply referred to as a water heat exchanger 50), and the heat medium is cooled through the water heat exchanger 50.

<Device Configuration>

The refrigeration cycle apparatus 100 has a refrigeration circuit in which a compressor 1 that compresses refrigerant, a four-way valve 2 serving as a flow channel switching device that switches a flow of refrigerant, an outdoor heat exchanger (air heat exchanger) 3 in which refrigerant and outside air conveyed by an outdoor air-sending device 3a exchange heat, a decompression device (expansion valve) 4 that adjusts the flow amount of refrigerant while decompressing the pressure of the refrigerant, for example, a refrigerant side of the water heat exchanger 50 in which refrigerant and a heat medium exchange heat, and an accumulator 5 that stores refrigerant, are connected in series by a refrigerant pipe 10.

It should be noted that an outdoor air-sending device 3a such as a fan is provided near the outdoor heat exchanger 3. The outdoor air-sending device 3a supplies air to the outdoor heat exchanger 3. The four-way valve 2 and the accumulator 5 are not indispensable for the configuration of the refrigeration cycle apparatus 100. Further, instead of the four-way valve 2, a two-way valve and a three-way valve may be used in combination.

The compressor 1, configured of an inverter compressor in which the capacity is controllable, sucks refrigerant and compresses the refrigerant to make it in a high-temperature and high-pressure state. As the compressor 1, a rotary compressor, a scroll compressor, a screw compressor, a reciprocating compressor, or another type compressor is applicable.

The four-way valve 2 performs switching between the flow of refrigerant at the time of heating operation and the flow of refrigerant at the time of cooling operation.

The outdoor heat exchanger 3 functions as an evaporator or a condenser (or a radiator), allows heat exchange between the air supplied from the outdoor air-sending device 3a and the refrigerant, and vaporizes and gasifies the refrigerant or condenses and liquefies the refrigerant.

The accumulator 5 is provided on the suction side of the compressor 1, and stores extra refrigerant.

The refrigeration cycle apparatus 100 also includes a heat medium circuit in which a heat medium pump (hereinafter simply referred to as a water pump 51) and the heat medium side of the water heat exchanger 50 are connected in series by a fluid pipe 20. In the heat medium circuit, water flows, for example. However, the heat medium is not limited to water. Antifreeze (brine) or other media may be selected.

The water pump 51 is used for circulating water in the heat medium circuit, which may be configured of an inverter pump in which the rotation speed is variable or a constant-speed pump.

The refrigeration cycle apparatus 100 further includes a controller 30 that collectively controls the refrigeration cycle apparatus 100. The controller 30 controls respective actuators (drive components of the compressor 1, the four-way valve 2, the outdoor air-sending device 3a, the expansion valve 4, the water pump 51, and other devices) based on the detected values from the respective detection units. The controller 30 may be configured of hardware such as a circuit device realizing the function thereof, or may be configured of an arithmetic unit such as a microcomputer or a CPU and software executed thereon.

The refrigeration cycle apparatus 100 is provided with at least a first temperature detection unit (temperature sensor) 61 that detects inlet water temperature of the heat medium side of the water heat exchanger 50, a second temperature detection unit (temperature sensor) 62 that detects outlet water temperature of the heat medium side of the water heat exchanger 50, a third temperature detection unit (temperature sensor) 63 that detects outlet refrigerant temperature on the refrigerant side of the water heat exchanger 50, and a pressure detection unit (pressure sensor) 64 that detects outlet refrigerant pressure of the refrigerant side of the water heat exchanger 50, as respective detectors.

The refrigerant used in the refrigeration cycle apparatus 100 is not limited particularly. HFC refrigerant such as R410A or R32, or natural refrigerant such as hydrocarbon can be used.

Further, as the refrigerant used in the refrigeration cycle apparatus 100, 1,1,2-trifluoroethylene (HFO-1123) having low GWP and high operating pressure may be used as a main component. However, as HFO-1123 has a temperature glide, it is preferable to calculate evaporating temperature ET by the inlet and outlet pressures of the evaporator.

<Operation Mode>

In the cooling operation mode, the four-way valve 2 is switched such that the compressor 1 and the outdoor heat exchanger 3 communicate with each other, and the compressor 1, the four-way valve 2, the outdoor heat exchanger 3, the expansion valve 4, the water heat exchanger 50, the accumulator 5, and the compressor 1 are annularly connected in this order. Accordingly, in the cooler operation mode, the outdoor heat exchanger 3 functions as a condenser and the water heat exchanger 50 functions as an evaporator.

In the heating operation mode, the four-way valve 2 is switched such that the compressor 1 and the water heat exchanger 50 communicate with each other, and the compressor 1, the four-way valve 2, the water heat exchanger 50, the expansion valve 4, the outdoor heat exchanger 3, the accumulator 5, and the compressor 1 are annularly connected in this order. Accordingly, in the heating operation mode, the outdoor heat exchanger 3 functions as an evaporator and the water heat exchanger 50 functions as a condenser.

Fig. 2 is a graph showing a correlation between the water temperature and the freezing temperature in a water heat exchanger. A conventional problem will be described in detail based on Fig. 2. Here, problems in Expression (1) and Expression (2) shown in Patent Literatures 1 and 2 described above will be described.

In an actual freezing test of a water heat exchanger, first, calculation is made by using arithmetic mean water temperature as freezing wall temperature Twf. In this case, when an operation causing the effective heat transfer area of the water heat exchanger to be decreased (outlet SH of water heat exchanger = large) is performed, a freezing phenomenon occurs although wall temperature Twl > freezing wall temperature Twf (calculated) is established.

Next, in an actual freezing test of a water heat exchanger, calculation is made by using outlet water temperature as the freezing wall temperature Twf. In this case, Twl < Twf is established, whereby the operating range is narrowed.

Assuming that the water flow amount is constant (minimum flow amount capable of flowing in a unit), θc* in Expression (2) is constant.

Accordingly, when the outlet water temperature (water temperature low) is used as the water temperature Tw, the freezing wall temperature Twf increases, according to Expression (1) ((A) shown in Fig. 2).

On the contrary, when the arithmetic mean water temperature (water temperature high) is used as the water temperature Tw, the freezing wall temperature Twf decreases ((B) shown in Fig. 2).

Regarding the freezing temperature (measured value ((C) shown in Fig. 2), in the region where the outlet and inlet average water temperature is low and in the case where the outlet SH of the water heat exchanger = small, the freezing temperature is low. Meanwhile, in the region where the outlet and inlet average water temperature is high and the outlet SH of the water heat exchanger = large, the freezing temperature increases.

Thereby, freezing may occur or the operating range may be decreased although freezing does not occur, depending on the water temperature adopted in Expressions (1) and (2),

As such, it is preferable to calculate freezing wall temperature Twf approximate to the measured value of the freezing temperature.

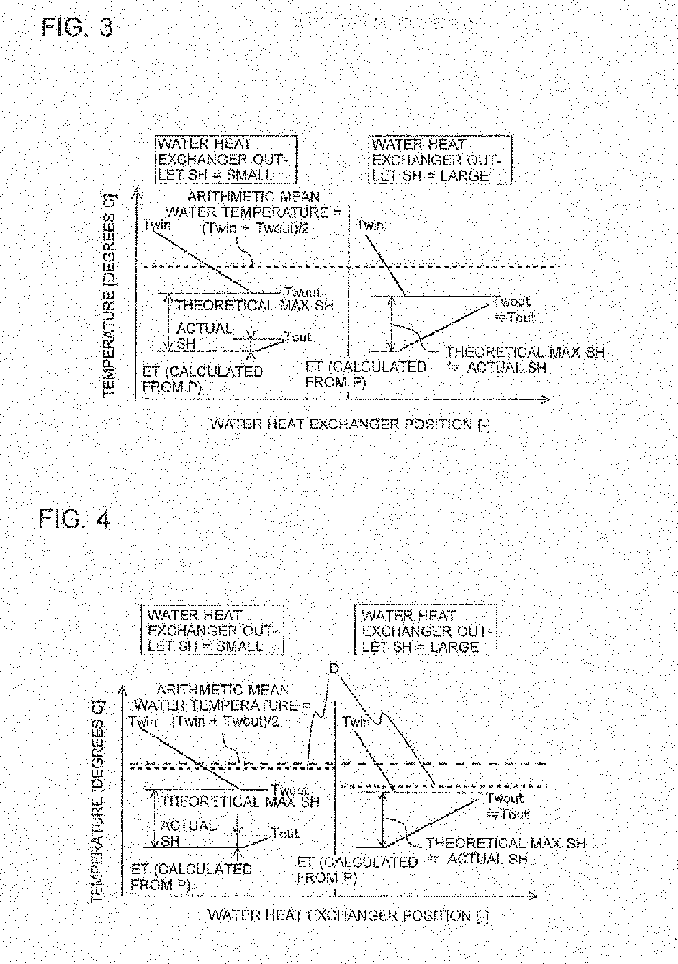

Fig. 3 is a graph showing changes in the water temperature in a water heat exchanger. Based on Fig. 3, changes in the water temperature in a water heat exchanger will be described. In Fig. 3, description is given on the case where the outlet water temperature and the inlet water temperature of the water heat exchanger are the same when SH is high and SH is low.

When SH is low (left side graph in Fig. 3), as the heat exchange region between the two-phase refrigerant and the water increases, the water temperature varies linearly from the inlet water temperature Twin toward the outlet water temperature Twout. Accordingly, the arithmetic mean water temperature ≈ internal average temperature (weighted average water temperature) of the water heat exchanger is established.

When SH is high (right side graph in Fig. 3), as the heat exchange region between the gas refrigerant and the water increases, the region of the outlet water temperature Twout increases inside the water heat exchanger. Accordingly, the outlet water temperature ≈ internal average temperature (weighted average water temperature) of the water heat exchanger is established.

The phenomenon of changes in the water temperature in the water heat exchanger can be captured more accurately when the weighted average temperature is used. However, in an attempt to use weighted average temperature, a plurality of thermistors must be arranged in the water flowing direction inside the water heat exchanger, which is not practical.

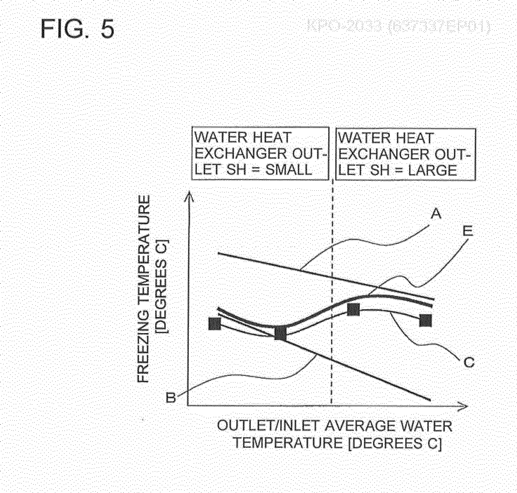

Fig. 4 is a graph for explaining the principle of calculating the freezing wall temperature Twf in the refrigeration cycle apparatus 100. Fig. 5 is a graph illustrating a correlation between the water temperature and the freezing temperature in the water heat exchanger 50 of the refrigeration cycle apparatus 100. The principle of calculating the freezing wall temperature Twf in the refrigeration cycle apparatus 100 and the freezing prevention control performed by the refrigeration cycle apparatus 100 will be described based on Figs. 4 and 5. It should be noted that freezing prevention control means control to prevent the heat medium flowing in the water heat exchanger 50 from being frozen.

In the refrigeration cycle apparatus 100, as shown in Expression (3) and Expression (4) provided below, temperature effectiveness of the water heat exchanger 50 (heat exchange region between the two-phase refrigerant and the water heat exchanger 50) is expressed as ε by using the outlet SH of the water heat exchanger 50, which is used for calculating the water temperature Tw ((D) shown in Fig. 4). Then, the calculated water temperature Tw is used in Expression (1) and Expression (2).

$$\text{Expression (3)} \qquad Tw = Twout^* \times \varepsilon + \{(Twin + Twout)/2\} \times (\varepsilon\text{-}1)$$

$$\text{Expression (4)} \qquad \varepsilon = SH/(Twout - ET)$$

Here,

Tw: water temperature [degrees C],
ε: temperature effectiveness [-],
Tout: outlet refrigerant temperature of water heat exchanger 50 [degrees C],
Twin: inlet water temperature of water heat exchanger 50 [degrees C],
Twout: outlet water temperature of water heat exchanger 50 [degrees C],
SH: Tout - ET [degrees C], and
ET: evaporating temperature of water heat exchanger 50.

By calculating the water temperature Tw with use of Expressions (3) and (4), it is possible to reproduce an actual freezing phenomenon (a point of inflection where the freezing temperature increases when the outlet water temperature and inlet water temperature increase) ((E) shown in Fig. 5). This means that it is possible to calculate the freezing wall temperature Twf approximate to the measured value of the freezing temperature with use of Expressions (1) to (4). As such, according to the refrigeration cycle apparatus 100, the freezing determination accuracy is improved. Therefore, in the refrigeration cycle apparatus 100, it is possible to maximize the operating range while preventing freezing of the water heat exchanger 50.

This means that in the refrigeration cycle apparatus 100, at least two parameters, namely an average value of the outlet water temperature and the inlet water temperature of the water heat exchanger 50 and the outlet SH of the water heat exchanger 50, are used for calculating the freezing wall temperature Twf. Thereby, the refrigeration cycle apparatus 100 is able to acquire the freezing wall temperature Twf approximate to the measured value of the freezing temperature, and to perform freezing prevention control based on the acquired freezing wall temperature Twf.

As a specific example of freezing prevention control, when an average value of the outlet water temperature and the inlet water temperature of the water heat exchanger 50 is higher than a reference value (e.g., 4.5 degrees C) and the outlet SH of the water heat exchanger 50 is greater than a reference value (e.g., 7.5 degrees C), the refrigeration cycle apparatus 100 may set the stop temperature of the compressor 1 to be higher than the stop temperature currently set. According to the current invention, when an average value of the outlet water temperature and the inlet water temperature of the water heat exchanger 50 is higher than a reference value and the outlet SH of the water heat exchanger 50 is greater than a reference value, the refrigeration cycle apparatus 100 may set the rotation speed of the water pump 51 to be higher than the rotation speed currently set to thereby increase the flow velocity of the water. By performing the freezing prevention control in this way, the refrigeration cycle apparatus 100 is able to protect the water heat exchanger 50 from freezing and maximize the operating range.

Reference Signs List

1 compressor 2 four-way valve 3 outdoor heat exchanger 3a outdoor air-sending device 4 expansion valve 5 accumulator 10 refrigerant pipe 20 fluid pipe 30 controller 50 water heat exchanger
51 water pump 61 first temperature detection unit 62 second temperature detection unit 63 third temperature detection unit 64 pressure detection unit 100 refrigeration cycle apparatus

**Claims**

1.  A refrigeration cycle apparatus (100) comprising:

a refrigerant circuit including a compressor (1), an air heat exchanger (3), a decompression device (4), a heat medium heat exchanger (50), and a refrigerant pipe (10), the heat medium heat exchanger (50) having a refrigerant side and a medium side, the compressor (1), the air heat exchanger (3), the decompression device (4), and the refrigerant side of the heat medium heat exchanger (50) being connected by the refrigerant pipe (10); a heat medium circuit including the heat medium heat exchanger (50), a heat medium pump (51), and a fluid pipe (20), the medium side of the heat medium heat exchanger (50) and the heat medium pump (51) being connected by the fluid pipe (20); and a controller (30) configured to:

perform freezing prevention control to prevent freezing of a heat medium flowing through the heat medium heat exchanger (50) by controlling the heat medium pump (51), based on outlet superheat degree of the heat medium heat exchanger (50) and an average temperature of an outlet heat medium temperature and an inlet heat medium temperature of the heat medium heat exchanger (50), the outlet superheat degree of the heat medium heat exchanger (50) being calculated by subtracting an evaporating temperature of the heat medium heat exchanger (50) from an outlet refrigerant temperature of the heat medium heat exchanger (50), and set a rotational speed of the heat medium pump (51) to be higher when the outlet superheat degree of the heat medium heat exchanger (50) is greater than a reference value and the average heat medium temperature of the outlet heat medium temperature and the inlet heat medium temperature of the heat medium heat exchanger (50) is greater than a reference value.

**Patentansprüche**

1.  Kältekreisvorrichtung (100), umfassend:

einen Kältemittelkreislauf, aufweisend einen Verdichter (1), einen Luftwärmetauscher (3), eine Dekompressionseinrichtung (4), einen Wärmemediumwärmetauscher (50), und eine Kältemittelleitung (10), wobei der Wärmemediumwärmetauscher (50) eine Kältemittelseite und eine Mediumseite aufweist, wobei der Verdichter (1), der Luftwärmetauscher (3), die Dekompressionseinrichtung (4) und die Kältemittelseite des Wärmemediumwärmetauschers (50) durch die Kältemittelleitung (10) verbunden sind; einen Wärmemediumkreislauf, aufweisend den Wärmemediumwärmetauscher (50), eine Wärmemediumpumpe (51) und eine Fluidleitung (20), wobei die Mediumseite des Wärmemediumwärmetauschers (50) und die Wärmemediumpumpe (51) durch die Fluidleitung (20) verbunden sind; und eine Steuereinheit (30), die eingerichtet ist zum:

Durchführen einer Gefrierverhinderungssteuerung, um das Gefrieren eines Wärmemediums, das durch den Wärmemediumwärmetauscher (50) strömt, zu verhindern, indem die Wärmemediumpumpe (51) auf der Grundlage eines Auslassüberhitzungsgrads des Wärmemediumwärmetauschers (50) und einer Durchschnittstemperatur einer Auslasswärmemediumtemperatur und einer Einlasswärmemediumtemperatur des Wärmemediumwärmetauschers (50) gesteuert wird, wobei der Auslassüberhitzungsgrad des Wärmemediumwärmetauschers (50) durch Subtrahieren einer Verdampfungstemperatur des Wärmemediumwärmetauschers (50) von einer Auslasskältemitteltemperatur des Wärmemediumwärmetauschers (50) berechnet wird, und Einstellen einer höheren Drehzahl der Wärmemediumpumpe (51), wenn der Auslassüberhitzungsgrad des Wärmemediumwärmetauschers (50) größer ist als ein Referenzwert und die durchschnittliche Wärmemediumtemperatur der Auslasswärmemediumtemperatur und der Einlasswärmemediumtemperatur des Wärmemediumwärmetauschers (50) größer ist als ein Referenzwert.

**Revendications**

1.  Appareil de cycle de réfrigération (100) comprenant :

un circuit de fluide frigorigène qui comprend un compresseur (1), un échangeur de chaleur d'air (3), un dispositif de décompression (4), un échangeur de chaleur de milieu thermique (50), et une canalisation de fluide frigorigène (10), l'échangeur de chaleur de milieu thermique (50) présentant un côté fluide frigorigène et un côté milieu thermique, le compresseur (1), l'échangeur de chaleur d'air (3), le dispositif de décompression (4), et le côté fluide frigorigène de l'échangeur de chaleur de milieu thermique (50), étant connectés par la canalisation de fluide frigorigène (10) ;

un circuit de milieu thermique comprenant l'échangeur de chaleur de milieu thermique (50), une pompe de milieu thermique (51), et une canalisation de fluide (20), le côté milieu thermique de l'échangeur de chaleur de milieu thermique (50), et la pompe de milieu thermique (51), étant connectés par la canalisation de fluide (20) ; et

un contrôleur (30) configuré pour :

exécuter une commande de prévention du gel, visant à empêcher le gel du milieu thermique qui circule à travers l'échangeur de chaleur de milieu thermique (50), en commandant la pompe de milieu thermique (51), sur la base du degré de surchauffe en sortie de l'échangeur de chaleur de milieu thermique (50), et de la température moyenne entre la température du milieu thermique en sortie, et la température du milieu thermique en entrée, de l'échangeur de chaleur de milieu thermique (50), le degré de surchauffe en sortie de l'échangeur de chaleur de milieu thermique (50), étant calculé en soustrayant la température d'évaporation de l'échangeur de chaleur de milieu thermique (50), de la température du fluide frigorigène en sortie de l'échangeur de chaleur de milieu thermique (50), et

fixer la vitesse de rotation de la pompe de milieu thermique (51) de façon à ce qu'elle soit plus élevée, lorsque le degré de surchauffe de sortie de l'échangeur de chaleur de milieu thermique (50) est supérieur à une valeur de référence, et lorsque la température moyenne du milieu thermique entre la température du milieu thermique en sortie, et la température du milieu thermique en entrée, de l'échangeur de chaleur de milieu thermique (50), est supérieure à une valeur de référence.

FIG. 1

FIG. 2

FIG. 3

FIG. 4

FIG. 5

| WATER HEAT EXCHANGER OUT- LET SH = SMALL | WATER HEAT EXCHANGER OUT- LET SH = LARGE |

FREEZING TEMPERATURE [DEGREES C]

A

E

B

C

OUTLET/INLET AVERAGE WATER
TEMPERATURE [DEGREES C]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013079749 A
- US 2013167567 A1
- JP 4823264 B
- JP 5484503 B